# EUROPEAN PATENT APPLICATION

(11) **EP 4 072 208 A1**
(43) Date of publication of application: **12.10.2022**
(21) Application number: 21167313.2
(22) Date of filing: 08.04.2021
(51) Int. Cl.: H04W 60/00, H04W 28/00

(54) **CELLULAR LOCAL AREA NETWORK (CLAN)**

(71) Applicant: Deutsche Telekom AG, 53113 Bonn (DE); Hochschule für Technik, Wirtschaft Und Kultur Leipzig, 04277 Leipzig (DE)
(72) Inventor: EINHAUS, Michael, 04105 Leipzig (DE); BAYER, Dr. Nico, 61231 Bad Nauheim (DE); BREITBACH, Dr. Markus Johannes, 53227 Bonn (DE); ROOS, Dr. Andreas, 64354 Reinheim (DE); MICHEL, Uwe, 53639 Königswinter (DE); CHARAF, Mohamad Buchr, 04279 Leipzig (DE); KIM, Igor, 04277 Leipzip (DE)
(74) Representative: Vossius & Partner Patentanwälte Rechtsanwälte mbB

(57) **Abstract**

The invention provides a wireless communication method for use in a first network node for setup of a cellular local area network, CLAN, the method comprising: setting up the CLAN for direct communication with at least one second network node through at least one CLAN bridge using a CLAN controller.

## Description

The present disclosure relates to methods and devices for setup and use of a cellular local area network, CLAN.

In conventional 4G/5G network deployments, the application level communication between two user equipment (UE) instances always involves at least one gateway that connects the radio access network with the core network. The radio access network provides the access to IP connectivity for UEs via radio base stations (eNBs/gNBs) within the 4G/5G system (3GPP TS 23.401 v 16.8.0, "GPRS enhancements for E-UTRAN access" and 3GPP TS 23.501 v 16.6.0, "System architecture for the 5G System").

The involvement of a gateway applies for both cases where the two UEs are associated to the same eNB/gNB and where the UEs are associated to different eNBs/gNBs. The link between the IP endpoints in the UE and the gateway is provided by an EPS bearer or QoS flow within the scope of 4G and 5G deployments, respectively. Each EPS bearer / QoS flow is associated with a set of Quality of Service (QoS) parameters. The gateway provides the access to an external Packet Data Network (PDN) such as the public Internet.

These EPS bearers / QoS flows are mapped onto radio bearers between the UE and the eNB/gNB. Two types of radio bearers, Signaling Radio Bearers (SRB) and Dedicated Radio Bearers (DRB) are supported in the 4G/5G system. The first ones are used for the transfer of Radio Resource Control (RRC) and Non Access Stratum (NAS) messages while the latter ones are used for the transfer of user data associated with EPS bearers / QoS flows.

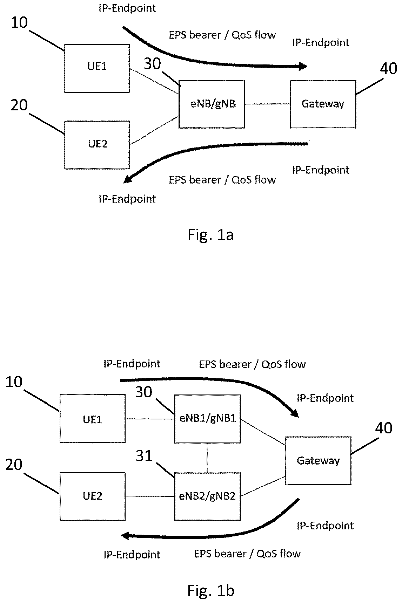

As schematically illustrated in Figs. 1a and 1b, if one UE 10 intends to communicated with another UE 20, the corresponding user data transmission always involves the gateway 40, even if both UEs 10, 20 are associated to the same eNB/gNB 30. This is shown in Figs. 1a and 1b for two UEs 10, 20 associated to the same or different eNBs/gNBs 30, 31, respectively.

The interface between eNB/gNB 30 and gateway 40, and the processing of user data packets within the gateway 40, may introduce significant and unnecessary latency to the user data flow between two UEs 10, 20. This is especially relevant if the gateway 40 is not collocated with the eNB/gNB 30 implementation.

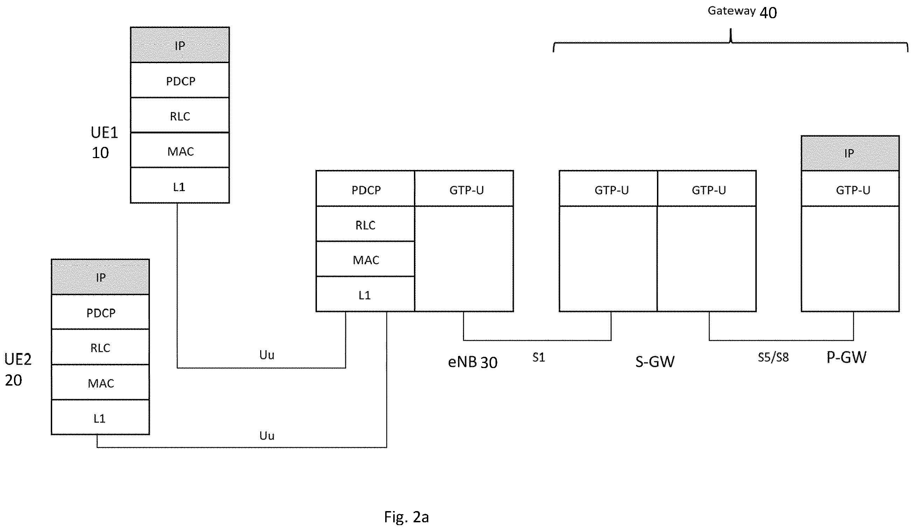

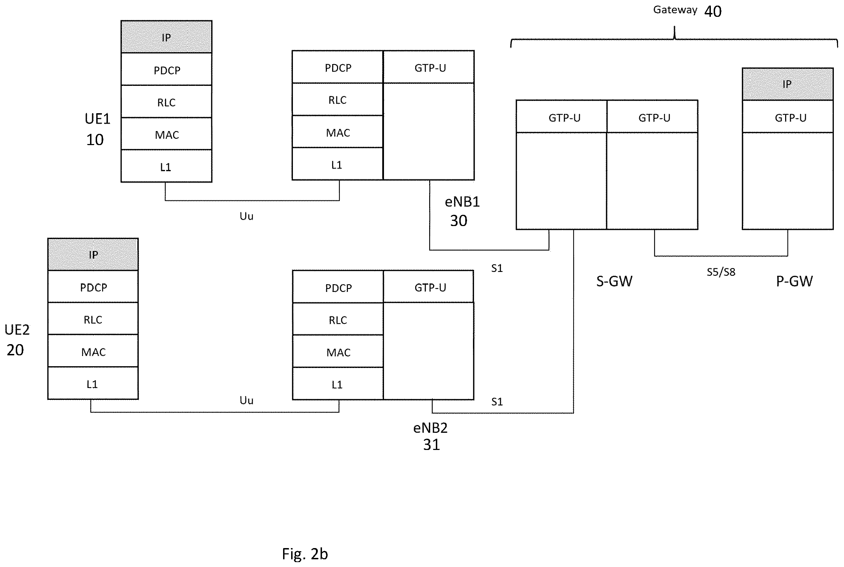

The user plane (UP) protocol architecture of the 4G system is shown in Figs. 2a and 2b for one eNB 30 and two eNBs 30, 31, respectively. The combination of Serving Gateway (S-GW) and Packet Data Network Gateway (P-GW) embody here a specific exemplary implementation of the gateway 40 in Figs. 1a and 1b as described above.

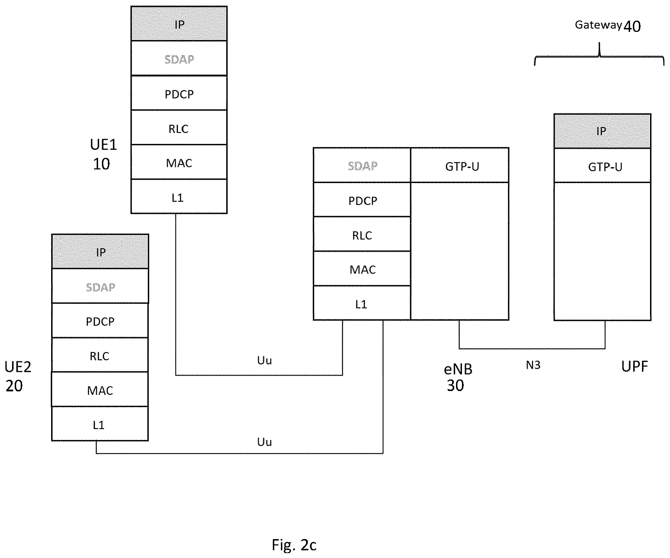

The user plane (UP) protocol architecture of the 5G system with a single gNB 30 is shown in Fig. 2c. The gateway 40 is represented by the User Plane Function (UPF).

Local IP Access (LIPA) functionality enables UEs 10, 20 to access directly enterprise or residential networks without UP data travelling first to a centralized gateway 40 in the EPC. However, this still involves a local gateway 40. Uplink and downlink user data transmissions over the radio interface are treated independently, even if the involved UEs 10, 20 are associated to the same eNB 30. Joint optimization or coordination of resource allocations of uplink and downlink transmissions involved in an end-to-end user data transmission between two UEs 10, 20 is not possible.

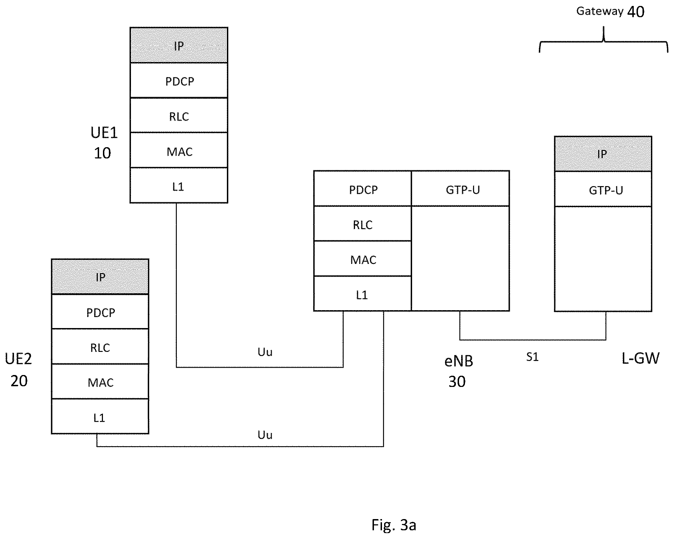

Fig. 3a shows an extension of the architecture by a Local Gateway (L-GW) 40 that has been introduced into the 4G system for the support of Home eNBs 30 (3GPP TS 23.401 v 16.8.0, "GPRS enhancements for E-UTRAN access").

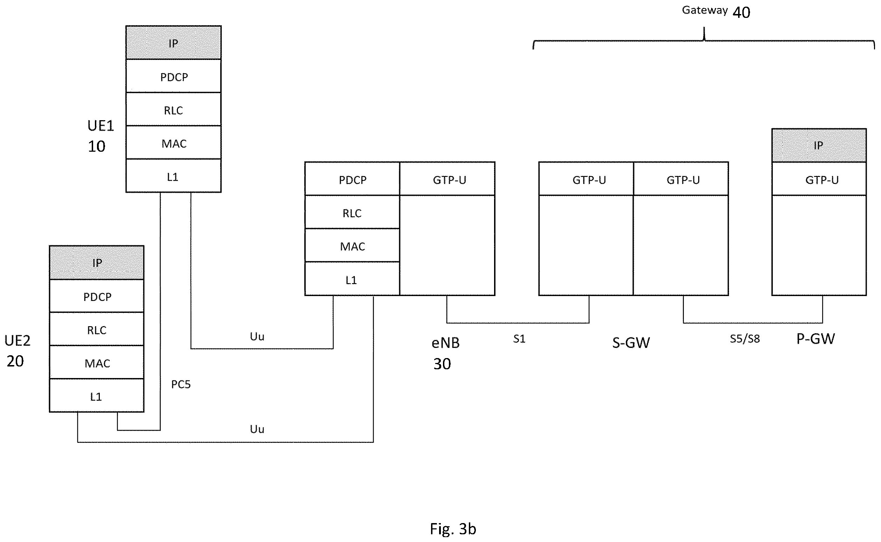

With reference to Fig. 3b, Proximity Services (ProSe) allows UEs 10, 20 that are associated to the same eNB 30 within the 4G system to detect each other and communicate directly (3GPP TS 23.303 v 16.0.0, "Proximity-based services"). The communication is thereby established over a sidelink (SL) between the UEs 10, 20. This can significantly reduce the end-to-end latency and radio resource utilization in such cases since it replaces the combination of uplink (UL) and downlink (DL) for the end-to-end connectivity between two UEs 10, 20. The connection between two UEs 10, 20 is provide by the PC5 interface. User data transmissions between two UEs 10, 20 that are associated to the same eNB/gNB 30 is possible without the involvement of a gateway 40. A prerequisite is, however, that both UEs 10, 20 can directly communicate with each other in the sense that they are located within a mutual coverage area. Another disadvantage is the limited capacity for advanced channel state estimation, link adaptation and dynamic resource allocation strategies for the user data transmissions over the sidelink compared to conventional uplink and downlink transmissions involving radio base stations. The potential of ProSe within the 5G system is currently investigated within a corresponding 3GPP study item (3GPP TR 23.752 v 1.0.0, "Study on system enhancement for ProSe in the 5G System").

It is an object of the present invention to overcome the aforementioned deficiencies for communication between UEs. The object is achieved with the features of the independent claims. Dependent claims define preferred embodiments of the invention.

In particular, the present disclosure relates to a wireless communication method for use in a first network node for setup of a cellular local area network, CLAN, the method comprising: setting up the CLAN for direct communication with at least one second network node through at least one CLAN bridge using a CLAN controller.

Various embodiments may preferably implement the following features.

Setting up the CLAN preferably comprises: transmitting a setup request to the CLAN controller; and receiving a setup response from the CLAN controller.

The wireless communication method preferably further comprising a step of attaching the first network node to the CLAN, which preferably comprises: transmitting an attach request to the CLAN controller; and receiving an attach response from the CLAN controller.

The wireless communication method preferably further comprising a step of receiving a status indication message from the CLAN controller after successful attachement of the at least one second network node to the CLAN.

The present disclosure also relates to a wireless communication method for use in a second wireless network node for attachment to a cellular local area network, CLAN, the method comprising: attaching the second wireless network node to the CLAN for direct communication with at least a first network node through at least one CLAN bridge using a CLAN controller.

Various embodiments may preferably implement the following features.

Attaching the second wireless network node to the CLAN preferably comprises: transmitting an attach request to the CLAN controller; and receiving an attach response from the CLAN controller.

The attach response is preferably received after a successful link setup between the CLAN controller and the CLAN bridge.

The present disclosure also relates to a wireless communication method for establishing a cellular local area network, CLAN, between a fist network node and at least a second network node the method comprising any of the foregoing described steps.

Various embodiments may preferably implement the following features.

The communication between the first and the at least one second network node is preferably relayed only by the at least one CLAN bridge.

The communication between the first and the at least one second network node is preferably done without the use of a gateway device.

The present disclosure also relates to a first wireless network node for setup of a cellular local area network, CLAN, the first wireless network node comprising: a processor configured to: setup the CLAN for direct communication with at least one second network node through at least one CLAN bridge using a CLAN controller.

The first wireless network node preferably further comprises: a communication unit configured to: transmit a setup request to the CLAN controller; and receive a setup response from the CLAN controller.

The processor is preferably further configured to attach the first wireless network node to the CLAN, and preferably wherein the communication unit is further configured to: transmit an attach request to the CLAN controller; and receive an attach response from the CLAN controller.

The communication unit is preferably further configured to: receive a status indication message from the CLAN controller after successful attachement of the at least one second network node to the CLAN.

The present disclosure also relates to a second wireless network node for attachment to a cellular local area network, CLAN, the second wireless network node comprising: a processor configured to: attach the second wireless network node to the CLAN for direct communication with at least a first network node through at least one CLAN bridge using a CLAN controller.

Various embodiments may preferably implement the following features.

The second wireless network node preferably further comprises: a communication unit configured to: transmit an attach request to the CLAN controller; and receive an attach response from the CLAN controller.

The attach response is preferably received by the communication unit after a successful link setup between the CLAN controller and the CLAN bridge.

The present disclosure also relates to a cellular local area network, CLAN, comprising the first wireless network node and at least one second wireless network node as described above.

Various embodiments may preferably implement the following features.

The CLAN controller is preferably configured to initiate the setup of the CLAN.

The CLAN preferably further comprises: a CLAN controller configured to communicate with the first first wireless network node, the at least one the second wireless network node and at least one CLAN bridge.

The CLAN preferably further comprises: at least one CLAN bridge configured to communicate with the first first wireless network node, the at least one second wireless network node and a CLAN controller.

Communication between the first and the at least one second network node is preferably relayed only by the at least one CLAN bridge.

Preferably, the CLAN does not comprise a gateway device and preferably communication between the first and the at least one second network node is done without the use of a gateway device.

The at least one CLAN bridge is preferably integrated into a eNB or gNB protocol stack architecture and is configured to have access to the protocol layers within the eNB or gNB.

The CLAN controller is preferably a network function within a core network.

The present disclosure also relates to a computer program product comprising a computer-readable program medium code stored thereupon, the code, when executed by a processor, causing the processor to implement the wireless communication method described above.

The first and/or second network node is preferably a first and second UE, respectively.

The exemplary embodiments disclosed herein are directed to providing features that will become readily apparent by reference to the following description when taken in conjunction with the accompany drawings. In accordance with various embodiments, exemplary systems, methods, devices and computer program products are disclosed herein. It is understood, however, that these embodiments are presented by way of example and not limitation, and it will be apparent to those of ordinary skill in the art who read the present disclosure that various modifications to the disclosed embodiments can be made while remaining within the scope of the present disclosure.

Thus, the present disclosure is not limited to the exemplary embodiments and applications described and illustrated herein. Additionally, the specific order and/or hierarchy of steps in the methods disclosed herein are merely exemplary approaches. Based upon design preferences, the specific order or hierarchy of steps of the disclosed methods or processes can be re-arranged while remaining within the scope of the present disclosure. Thus, those of ordinary skill in the art will understand that the methods and techniques disclosed herein present various steps or acts in a sample order, and the present disclosure is not limited to the specific order or hierarchy presented unless expressly stated otherwise.

The above and other aspects and their implementations are described in greater detail in the drawings, the descriptions, and the claims.
Fig. 1a is a schematic illustration of 4G/5G user data traffic flow with a single base station (eNB/gNB).
Fig. 1b is a schematic illustration of 4G/5G user data traffic flow with multiple base stations (eNBs/gNBs).
Fig. 2a is a schematic illustration of a 4G user plane protocol architecture with single eNB.
Fig. 2b is a schematic illustration of a 4G user plane protocol architecture with multiple eNBs.
Fig. 2c is a schematic illustration of a 5G user plane protocol architecture with single gNB.
Fig. 3a is a schematic illustration of a 4G user plane protocol architecture with local gateway (L-GW).
Fig. 3b is a schematic illustration of a 4G user plane protocol architecture with sidelink (PC5).
Fig. 4a is a schematic illustration of CLAN user data flow with a single eNB/gNB according to an embodiment.
Fig. 4b is a schematic illustration of CLAN user data traffic flow with multiple eNBs/gNBs according to an embodiment.
Fig. 5 is a schematic illustration of a CLAN concept according to an embodiment.
Fig. 6 is a schematic illustration of a CLAN with a single eNB according to an embodiment.
Fig. 7 is a schematic illustration of a CLAN with multiple eNBs running on different hosts according to an embodiment.
Fig. 8 is a schematic illustration of a CLAN with multiple eNBs on running a single host according to an embodiment.
Fig. 9 is a schematic illustration of a CLAN with multiple eNBs and CU/DU split according to an embodiment.
Fig. 10 is a schematic illustration of an integration of the CLAN concept into a 5G system architecture according to an embodiment.
Fig. 11 is another schematic illustration of an integration of the CLAN concept into a 5G system architecture according to an embodiment.
Fig. 12a is a schematic illustration of service primitives for communication between a CLAN node and CLAN controller according to an embodiment.
Fig. 12b is another schematic illustration of service primitives for communication between a CLAN node and CLAN controller according to an embodiment.
Fig. 13 is a schematic illustration of service primitives for communication between a CLAN controller and CLAN bridge according to an embodiment.
Fig. 14 is a signaling chart for CLAN control message exchange for establishment of a CLAN according to an embodiment.
Fig. 15 is a signaling chart for CLAN control message exchange for attachment of a CLAN node to an established CLAN according to an embodiment.
Fig. 16 is a signaling chart for CLAN control message exchange for detachment of a CLAN node from an established CLAN according to an embodiment.
Fig. 17 is a signaling chart for CLAN control message exchange for releasing an established CLAN according to an embodiment.

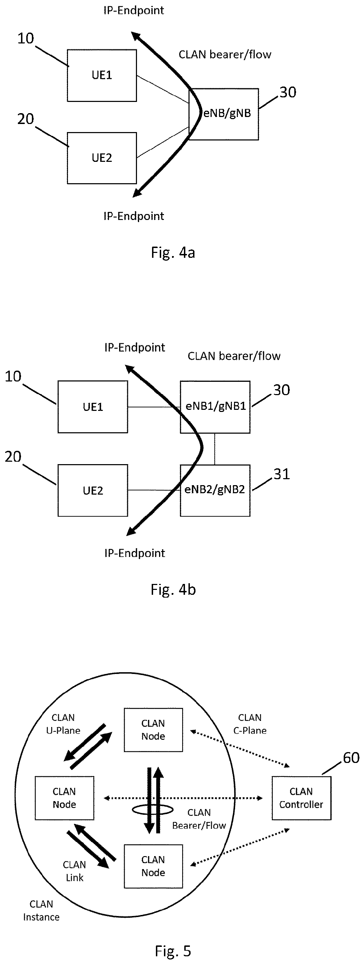

Fig. 4a schematically shows a CLAN user data flow with a single eNB/gNB 30 according to an embodiment. Fig. 4b schematically shows a CLAN user data traffic flow with multiple eNBs/gNBs 30, 31 according to an embodiment. In particular, the basic Cellular LAN (CLAN) concept is depicted in Figs. 4a and 4b for UEs 10, 20 associated to the same eNB/gNB 30 and to different eNBs/gNBs 30, 31, respectively. Fig. 5 schematically shows the CLAN architecture and the interrelation of the involved CLAN components according to an embodiment.

A new CLAN Bearer/Flow is introduced for the communication between UEs 10, 20 that act as CLAN nodes within a CLAN Instance. The difference between a CLAN Bearer/Flow and a conventional EPS bearer/QoS flow within the 4G/5G system is that no gateway is involved in the user data transmission between CLAN nodes over a CLAN Bearer/Flow. The IP endpoints of a CLAN Bearer/Flow are on both sides located in the UEs 10, 20 that act as CLAN nodes. The involved eNBs/gNBs 30, 31 that provide radio interface connectivity for the UEs 10, 20 basically act as relays for the user data exchange between the CLAN nodes. Each CLAN instance is associated to a specific CLAN Quality of Service (QoS) Class which defines QoS parameters such as supported bit rate, error rate, latency, etc.

A CLAN instance is set up and released by a CLAN master node. Additional CLAN nodes can be attached to the established CLAN instance. Multiple CLAN instance can be established for the same set of eNBs/gNBs 30, 31.

A basic CLAN Bearer/Flow provides a logical bidirectional connection between two CLAN nodes. A fully meshed CLAN consisting of N CLAN nodes provides therefore N(N-1)/2 basic CLAN Bearers/Flows. It is furthermore possible to establish additional multicast or broadcast CLAN Bearers within a CLAN.

The CLAN node is an endpoint within the CLAN, it is represented by a UE 10, 20 within the 4G/5G system. CLAN nodes exchange CLAN data packet between each other within the CLAN user plane. A CLAN bridge 50 (not shown) is responsible for establishing the forwarding of CLAN data packets within an eNB/gNB 30 or between multiple eNBs/gNBs 30, 31 of the 4G/5G system within the CLAN user plane. The CLAN bridge 50 is integrated into the eNB/gNB protocol stack architecture and has access to the protocol layers within the corresponding eNBs/gNBs 30, 31.

A CLAN Controller 60 is a component that maintains the CLAN. It is a network function that provides CLAN related services to CLAN nodes. The services comprise setting up and releasing CLANs, attaching and detaching CLAN nodes to CLANs, providing information about established CLANs, and configuration of CLAN parameters. It furthermore configures the CLAN bridges 50 according to CLAN parameters and resource availability within the 4G/5G radio access network.

The CLAN controller 60 constitutes the CLAN control plane. It exchanges CLAN control messages with CLAN nodes and CLAN bridge instances 50 via corresponding logical CLAN control interfaces.

A CLAN link provides and unidirectional link between two CLAN nodes. It consists therefore of one uplink and one downlink connection on the 4G/5G air interface. Bidirectional communication between two CLAN nodes requires therefore two CLAN links. A fully meshed CLAN with bidirectional communication between N CLAN nodes requires N(N-1) unidirectional CLAN links. Two CLAN links between two CLAN nodes that establish bidirectional communication between these CLAN nodes form a corresponding basic CLAN bearer. Additional CLAN bearers for multicast or broadcast operation can be established as well.

The CLAN protocol layer is the layer within the eNB/gNB protocol stack that relays user data packets that are received from a CLAN node in the radio interface uplink to radio interface downlink to another CLAN node. The relaying is performed via the CLAN bridge instances 50.

In the context of the 5G system, the components CLAN node, CLAN controller 60 and CLAN bridge 50 basically represent network functions that provide specific services.

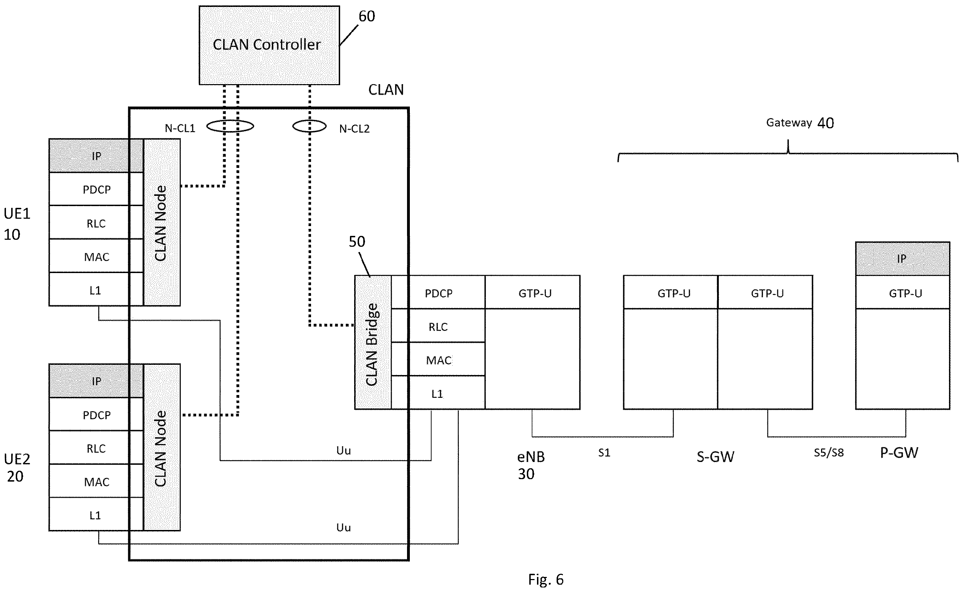

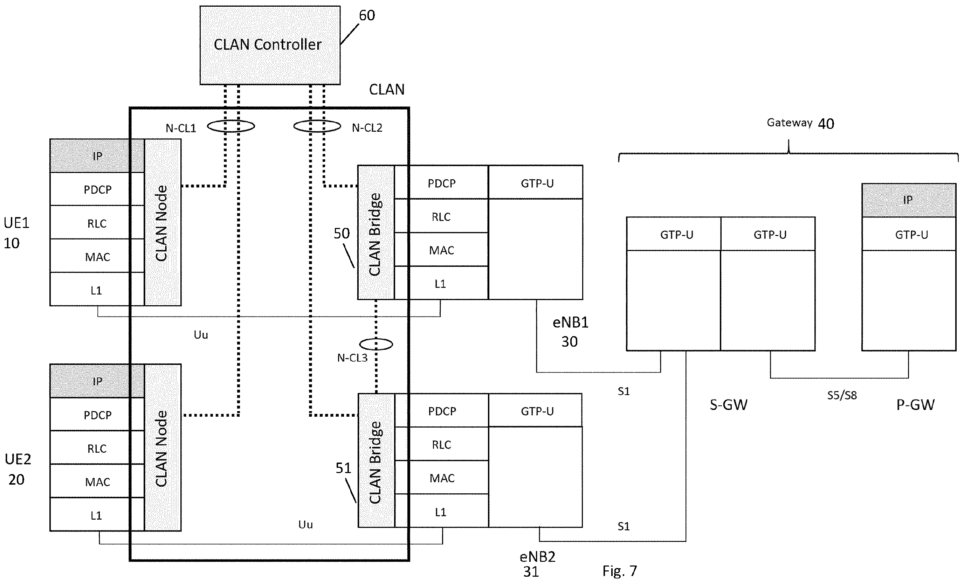

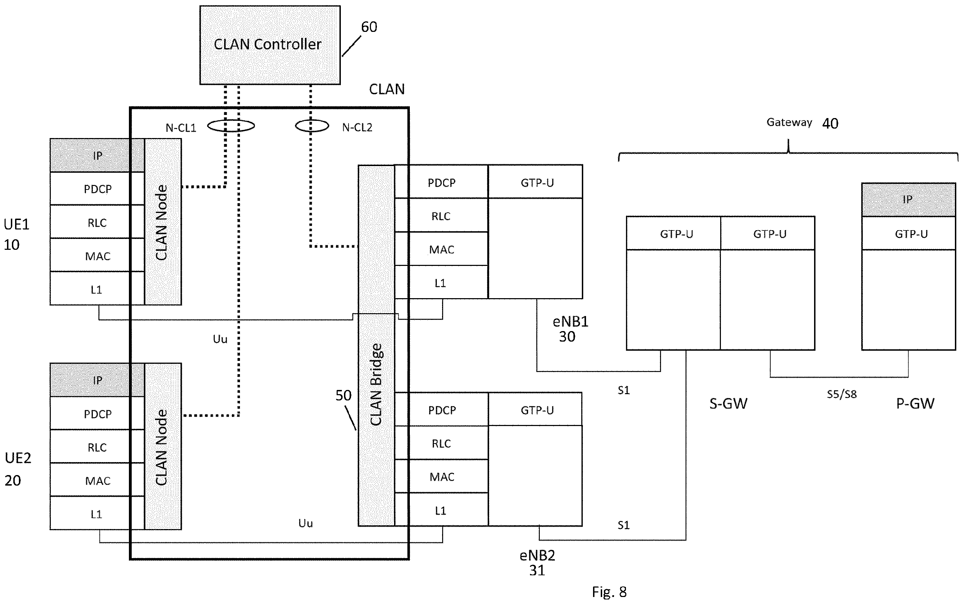

Figs. 6-8 show how CLAN node, CLAN bridge 50 and CLAN controller 60 may be integrated into the 4G protocol architecture. Fig. 6 shows the single eNB 30 case, and Figs. 7 and 8 show two different kinds of multi eNB 30, 31 implementations.

The two eNBs 30, 31 in Fig. 7 are hosted by different physical entities that are connected over a communication interface. The latter could for example be represented by the conventional X2 interface between eNBs 30, 31 within the LTE architecture.
Fig. 8 shows the scenario where two eNBs 30, 31 are hosted by the same physical entity. This could for example be the case with virtualized eNBs 30, 31 that are running within a cloud environment. This correspond to BBU pooling implementations as well.

The CLAN layer is the layer in the eNB protocol stack where user data packets from receiving protocol instance for the uplink transmission from a CLAN node relayed to a protocol instance for the corresponding downlink transmission to another CLAN node within the same CLAN instance. The relaying is performed via a CLAN bridge 50 that is controlled by a CLAN controller 60 via CLAN control messages.

The eNB/gNB protocol layers that can currently constitute the CLAN Layer are Service Data Adaptation Protocol (SDAP) introduced in the 5G system (3GPP TS 37.324 v 16.2.0, "Service Data Adaptation Protocol (SDAP) specification"), Packet Data Convergence Protocol (PDCP), Radio Link Control (RLC), Medium Access Control (MAC), and Physical Layer (L1). Depending on the involved protocol layers, CLAN related parameter configurations can be applied by the CLAN bridge 50 based on corresponding commands issued by the CLAN controller 60.

The CLAN control reference points for the communication between CLAN controller 60 and CLAN node is denoted N-CL1. The CLAN control reference points for the communication between CLAN controller 60 and CLAN bridge 50 is denoted N-CL2. The exchange of CLAN control messages over the corresponding logical CLAN control interfaces can be established by different means. The communication can for example be conducted via REST APIs within a service based architecture corresponding to the service based architecture of the 5G system (3GPP TS 23.501 v 16.6.0, "System architecture for the 5G System").

Another option is to extend existing protocols within the control plane of the 4G/5G system with appropriate messages and information elements. In this case, the CLAN controller 60 may be integrated into the Mobility Management Entity (MME) or the Access Management Function (AMF) within the 4G or 5G system, respectively.

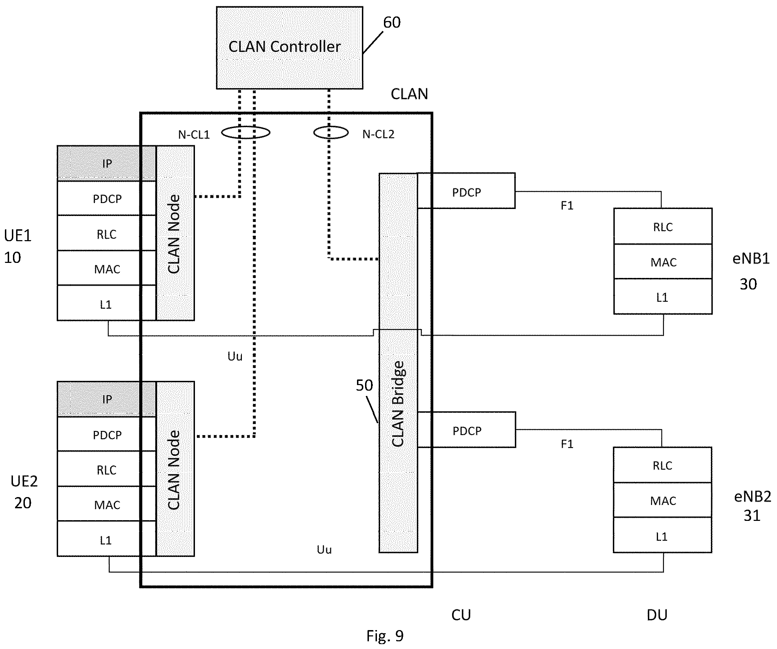

Fig. 9 shows the integration of the CLAN network functionality into an architecture incorporating a split between distributed unit (DU) and centralized unit (CU) according to an embodiment. The CLAN bridge 50 will provide the connection between the CU entities of the involved eNBs/gNBs 30, 31.

The 4G/5G control plane protocols applicable for CLAN control message extensions may be the S1 Application Protocol (3GPP TS 36.413 v 16.3.0, "S1 Application Protocol (S1AP)") for message exchange between CL-C and CL-B, NG Application Protocol (3GPP TS 38.413 v 16.3.0, "NG Application Protocol (NGAP)") for message exchange between CL-C and CL-B, and Non Access Stratum Protocol (3GPP TS 24.501 v 16.6.0, "Non-Access-Stratum (NAS) protocol for 5G System (5GS)", 3GPP TS 23.301 v16.6.0, "Non-Access-Stratum (NAS) protocol for Evolved Packet System (EPS)") for message exchange between CL-C and CL-N.

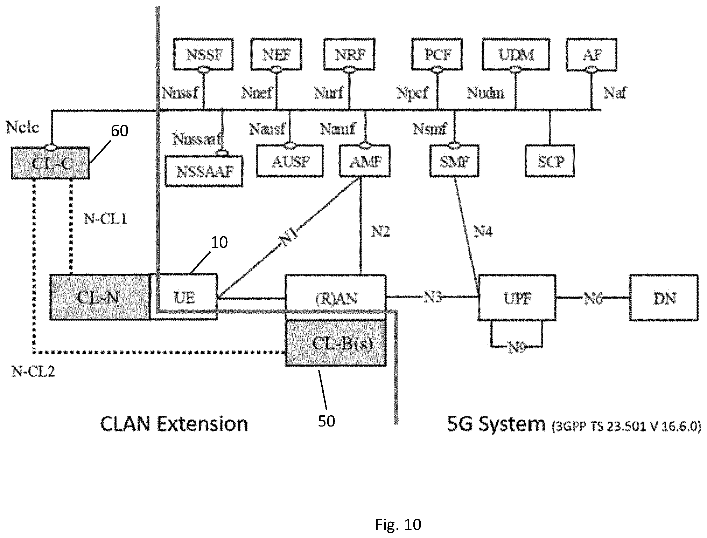

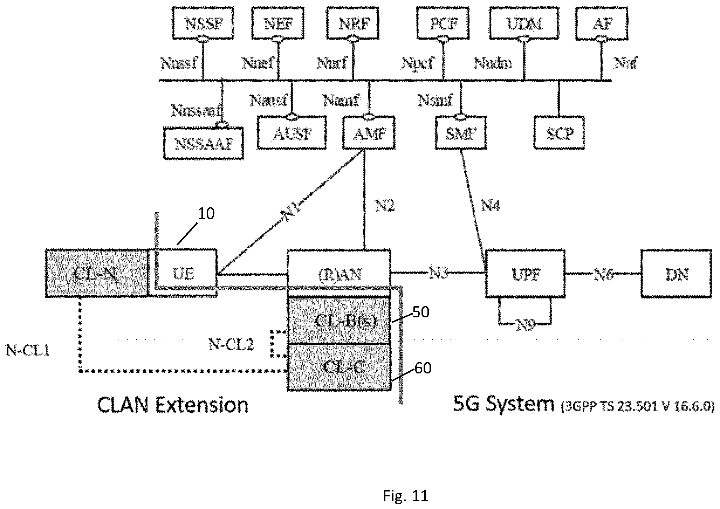

Two examples for integrating the CLAN components (network functions) into the 5G system are shown in Figs. 10 and 11. According to Fig. 10, the CLAN controller 60 represents a network function within the 5G core network with a corresponding reference point Nclc.

CLAN instances, CLAN nodes, CLAN controllers and CLAN bridges are identified by corresponding identifiers. These identifiers are used for CLAN control messages. The numbering and identification schemes may be aligned with the 3GPP system (3GPP TS 23.300 v 16.4.0, "Numbering, addressing and identification").

The CLAN controller 60 provides at least one of the following services: setting up a CLAN, releasing a CLAN, attaching a CLAN node to a CLAN, detaching a CLAN node from a CLAN, providing information about a CLAN to CLAN nodes, and configuration of CLAN parameters.

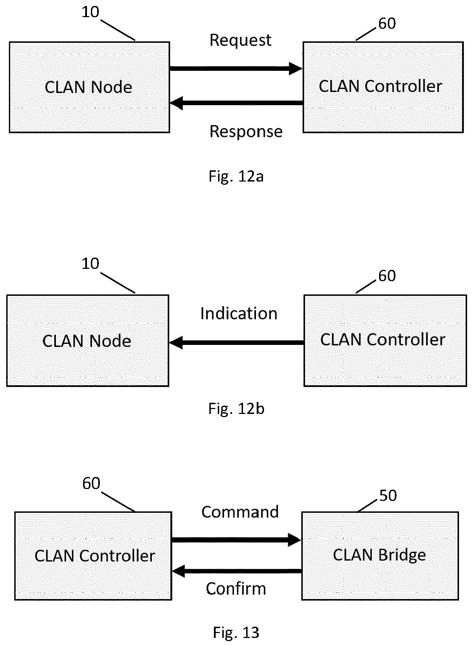

In order to provide these services, the CLAN components have to implement corresponding functions. Each CLAN related function is thereby triggered by corresponding CLAN control messages. The service primitives for the communication between CLAN node and CLAN controller 60 are shown in Figs. 12a and 12b. Service can be requested by a CLAN node and the CLAN controller 60 by answer with a corresponding response. The CLAN controller 60 can furthermore indicate certain actions or status changes to CLAN nodes.

The CLAN control messages that may be exchange between CLAN node and CLAN controller 60 are summarized in the following Table 1.

**Table 1: CLAN Control Messages**

| **Name** | **Direction** |
|---|---|
| CLAN Setup Request | Node -> Controller |
| CLAN Setup Response | Controller -> Node |
| CLAN Release Request | Node -> Controller |
| CLAN Release Response | Controller -> Node |
| CLAN Release Indication | Controller -> Node |
| CLAN Attach Request | Node -> Controller |
| CLAN Attach Response | Controller -> Node |
| CLAN Detach Request | Node -> Controller |
| CLAN Detach Response | Controller -> Node |
| CLAN Reconfiguration Request | Node -> Controller |
| CLAN Reconfiguration Response | Controller -> Node |
| CLAN Status Request | Node -> Controller |
| CLAN Status Response | Controller -> Node |
| CLAN Status Indication | Controller -> Node |

The service primitives for the communication between CLAN controller 60 and CLAN bridge 50 are shown in Fig. 13. The CLAN control messages that may be exchange between CLAN controller 60 and CLAN bridge 50 are summarized in the following Table 2.

**Table 2: CLAN Control Messages**

| **Name** | **Direction** |
|---|---|
| CLAN Link Setup Command | Controller -> Bridge |
| CLAN Link Setup Confirm | Bridge -> Contorller |
| CLAN Link Release Command | Controller -> Bridge |
| CLAN Link Release Confirm | Bridge -> Contorller |

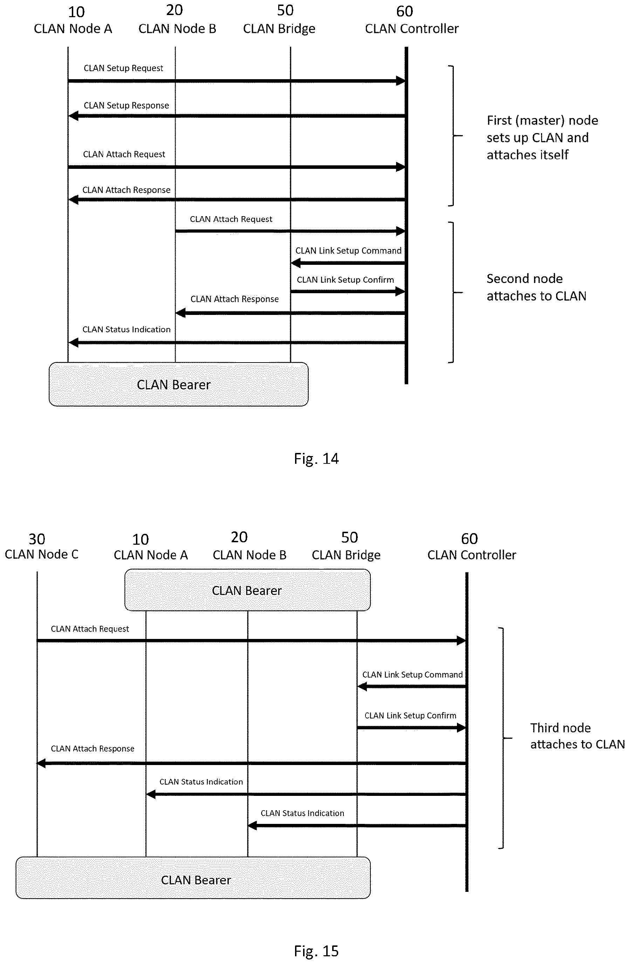

Exemplary message sequence charts for CLAN instance establishment, CLAN node attachment, CLAN node detachment and CLAN instance release are shown in Figs. 14-17. According to Fig. 14, the first (master) node 10 (CLAN node A) sets up a CLAN and attaches itself thereto. In particular, the first node 10 sends a CLAN setup request to the CLAN controller 60. The CLAN controller 60 sends a CLAN setup response to the first node 10. The first node 10 sends a CLAN attach request to the CLAN controller 60. The CLAN controller 60 sends a CLAN attach response to the first node 10.

Next, a second node 20 (CLAN node B) attaches to the CLAN. In particular, the second node 20 sends a CLAN attach request to the CLAN controller 60. The CLAN controller 60 sends a CLAN link setup command to the CLAN bridge 50. The CLAN bridge 50 sends a CLAN link setup confirm message to the CLAN controller 60. The CLAN controller 60 sends a CLAN attach response to the second node 20. The CLAN controller 60 sends a CLAN status indication to the first node 10.

According to Fig. 15, a third node 30 (CLAN node C) attaches to the CLAN. In particular, the third node 30 sends a CLAN attach request to the CLAN controller 60. The CLAN controller 60 sends a CLAN link setup command to the CLAN bridge 50. The CLAN bridge 50 sends a CLAN link setup confirm message to the CLAN controller 60. The CLAN controller 60 sends a CLAN attach response to the third node 30. The CLAN controller 60 sends a CLAN status indication to the first node 10 and to the second node 20.

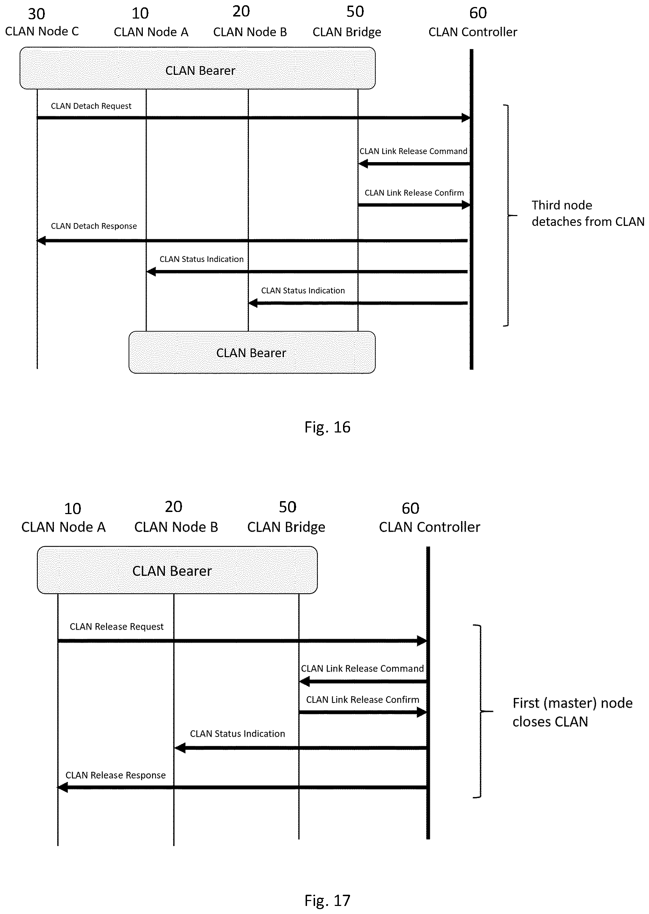

According to Fig. 16, the third node 30 detaches from the CLAN. In particular, the third node 30 sends a CLAN detach request to the CLAN controller 60. The CLAN controller 60 sends a CLAN link release command to the CLAN bridge 50. The CLAN bridge 50 sends a CLAN link release confirm message to the CLAN controller 60. The CLAN controller 60 sends a CLAN detach response to the third node 30. The CLAN controller 60 sends a CLAN status indication to the first node 10 and to the second node 20.

According to Fig. 17, the first (master) node 10 closes the CLAN. In particular, the first node 10 sends a CLAN release request to the CLAN controller 60. The CLAN controller 60 sends a CLAN link release command to the CLAN bridge 50. The CLAN bridge 50 sends a CLAN link release confirm message to the CLAN controller 60. The CLAN controller 60 sends a CLAN status indication to the second node 20. The CLAN controller 60 sends a CLAN release response to the first node 10.

While various embodiments of the present disclosure have been described above, it should be understood that they have been presented by way of example only, and not by way of limitation. Likewise, the various diagrams may depict an example architectural or configuration, which are provided to enable persons of ordinary skill in the art to understand exemplary features and functions of the present disclosure. Such persons would understand, however, that the present disclosure is not restricted to the illustrated example architectures or configurations, but can be implemented using a variety of alternative architectures and configurations. Additionally, as would be understood by persons of ordinary skill in the art, one or more features of one embodiment can be combined with one or more features of another embodiment described herein. Thus, the breadth and scope of the present disclosure should not be limited by any of the above-described exemplary embodiments.

It is also understood that any reference to an element herein using a designation such as "first," "second," and so forth does not generally limit the quantity or order of those elements. Rather, these designations can be used herein as a convenient means of distinguishing between two or more elements or instances of an element. Thus, a reference to first and second elements does not mean that only two elements can be employed, or that the first element must precede the second element in some manner.

Additionally, a person having ordinary skill in the art would understand that information and signals can be represented using any of a variety of different technologies and techniques. For example, data, instructions, commands, information, signals, bits and symbols, for example, which may be referenced in the above description can be represented by voltages, currents, electromagnetic waves, magnetic fields or particles, optical fields or particles, or any combination thereof.

A skilled person would further appreciate that any of the various illustrative logical blocks, units, processors, means, circuits, methods and functions described in connection with the aspects disclosed herein can be implemented by electronic hardware (e.g., a digital implementation, an analog implementation, or a combination of the two), firmware, various forms of program or design code incorporating instructions (which can be referred to herein, for convenience, as "software" or a "software unit"), or any combination of these techniques.

To clearly illustrate this interchangeability of hardware, firmware and software, various illustrative components, blocks, units, circuits, and steps have been described above generally in terms of their functionality. Whether such functionality is implemented as hardware, firmware or software, or a combination of these techniques, depends upon the particular application and design constraints imposed on the overall system. Skilled artisans can implement the described functionality in various ways for each particular application, but such implementation decisions do not cause a departure from the scope of the present disclosure. In accordance with various embodiments, a processor, device, component, circuit, structure, machine, unit, etc. can be configured to perform one or more of the functions described herein. The term "configured to" or "configured for" as used herein with respect to a specified operation or function refers to a processor, device, component, circuit, structure, machine, unit, etc. that is physically constructed, programmed and/or arranged to perform the specified operation or function.

Furthermore, a skilled person would understand that various illustrative logical blocks, units, devices, components and circuits described herein can be implemented within or performed by an integrated circuit (IC) that can include a general purpose processor, a digital signal processor (DSP), an application specific integrated circuit (ASIC), a field programmable gate array (FPGA) or other programmable logic device, or any combination thereof. The logical blocks, units, and circuits can further include antennas and/or transceivers to communicate with various components within the network or within the device. A general purpose processor can be a microprocessor, but in the alternative, the processor can be any conventional processor, controller, or state machine. A processor can also be implemented as a combination of computing devices, e.g., a combination of a DSP and a microprocessor, a plurality of microprocessors, one or more microprocessors in conjunction with a DSP core, or any other suitable configuration to perform the functions described herein. If implemented in software, the functions can be stored as one or more instructions or code on a computer-readable medium. Thus, the steps of a method or algorithm disclosed herein can be implemented as software stored on a computer-readable medium.

Computer-readable media includes both computer storage media and communication media including any medium that can be enabled to transfer a computer program or code from one place to another. A storage media can be any available media that can be accessed by a computer. By way of example, and not limitation, such computer-readable media can include RAM, ROM, EEPROM, CD-ROM or other optical disk storage, magnetic disk storage or other magnetic storage devices, or any other medium that can be used to store desired program code in the form of instructions or data structures and that can be accessed by a computer.

In this document, the term "unit" as used herein, refers to software, firmware, hardware, and any combination of these elements for performing the associated functions described herein. Additionally, for purpose of discussion, the various units are described as discrete units; however, as would be apparent to one of ordinary skill in the art, two or more units may be combined to form a single unit that performs the associated functions according embodiments of the present disclosure.

Additionally, memory or other storage, as well as communication components, may be employed in embodiments of the present disclosure. It will be appreciated that, for clarity purposes, the above description has described embodiments of the present disclosure with reference to different functional units and processors. However, it will be apparent that any suitable distribution of functionality between different functional units, processing logic elements or domains may be used without detracting from the present disclosure. For example, functionality illustrated to be performed by separate processing logic elements, or controllers, may be performed by the same processing logic element, or controller. Hence, references to specific functional units are only references to a suitable means for providing the described functionality, rather than indicative of a strict logical or physical structure or organization.

Various modifications to the implementations described in this disclosure will be readily apparent to those skilled in the art, and the general principles defined herein can be applied to other implementations without departing from the scope of this disclosure. Thus, the disclosure is not intended to be limited to the implementations shown herein, but is to be accorded the widest scope consistent with the novel features and principles disclosed herein, as recited in the claims below.

## Claims

1. A wireless communication method for use in a first network node (10) for setup of a cellular local area network, CLAN, the method comprising:
setting up the CLAN for direct communication with at least one second network node (20) through at least one CLAN bridge (50) using a CLAN controller (60).

2. The wireless communication method of claim 1, wherein setting up the CLAN comprises:
transmitting a setup request to the CLAN controller (60); and
receiving a setup response from the CLAN controller (60).

3. The wireless communication method of claim 1 or 2, further comprising a step of attaching the first network node (10) to the CLAN, which preferably comprises:
transmitting an attach request to the CLAN controller (60); and
receiving an attach response from the CLAN controller (60).

4. The wireless communication method of any one of claims 1 to 3, further comprising a step of receiving a status indication message from the CLAN controller (60) after successful attachement of the at least one second network node (20) to the CLAN.

5. A wireless communication method for use in a second wireless network node (20) for attachment to a cellular local area network, CLAN, the method comprising:
attaching the second wireless network node (20) to the CLAN for direct communication with at least a first network node (10) through at least one CLAN bridge (50) using a CLAN controller (60).

6. The wireless communication method of claim 5, wherein attaching the second wireless network node (20) to the CLAN comprises:
transmitting an attach request to the CLAN controller (60); and
receiving an attach response from the CLAN controller (60).

7. The wireless communication method of claim 6, wherein the attach response is received after a successful link setup between the CLAN controller (60) and the CLAN bridge (50).

8. A wireless communication method for establishing a cellular local area network, CLAN, between a fist network node (10) and at least a second network node (20) the method comprising the steps of any one of claims 1 to 4 and the steps of any one of claims 5 to 7, and wherein preferably the setting up the CLAN is initiated by the CLAN controller (60).

9. A first wireless network node (10) for setup of a cellular local area network, CLAN, the first wireless network node (10) being configured to implement the method of any one of claims 1 to 4.

10. A second wireless network node (20) for attachment to a cellular local area network, CLAN, the second wireless network node (20) being configured to implement the method of any one of claims 5 to 7.

11. A cellular local area network, CLAN, comprising the first wireless network node (10) of claim 9 and at least one second wireless network node (20) of claim 10.

12. The CLAN of claim 11, further comprising:
a CLAN controller (60) configured to communicate with the first first wireless network node (10), the at least one the second wireless network node (20) and at least one CLAN bridge (50), and wherein the CLAN controller (60) is preferably configured to initiate the setup of the CLAN.

13. The CLAN of claim 11 or 12, further comprising:
at least one CLAN bridge (50) configured to communicate with the first first wireless network node (10), the at least one second wireless network node (20) and a CLAN controller (60), and wherein communication between the first and the at least one second network node (10, 20) is preferably relayed only by the at least one CLAN bridge (50).

14. The CLAN of any one of claims 11 to 13, wherein the CLAN does not comprise a gateway device (40) and preferably communication between the first and the at least one second network node (10, 20) is done without the use of a gateway device (40); and/or
wherein the at least one CLAN bridge (50) is integrated into a eNB or gNB protocol stack architecture and is configured to have access to the protocol layers within the eNB or gNB; and/or
wherein the CLAN controller (60) is a network function within a core network.

15. A computer program product comprising a computer-readable program medium code stored thereupon, the code, when executed by a processor, causing the processor to implement a wireless communication method recited in any one of claims 1 to 8.
